# EUROPEAN PATENT SPECIFICATION

(11) **EP 2 046 086 B1**
(45) Date of publication and mention of the grant of the patent: **25.07.2012**
(21) Application number: 08164349.6
(22) Date of filing: 15.09.2008
(51) Int. Cl.: H04W 52/02

(54) **Communication apparatus and network search method thereof**
Kommunikationsvorrichtung und entsprechendes Netzsuchverfahren
Appareil de communication et procédé de recherche de réseau correspondant

(30) Priority: 17.09.2007 TW 96134696
(43) Date of publication of application: 08.04.2009
(73) Proprietor: HTC Corporation, Taoyuan County 330 (TW)
(72) Inventor: Ko, Jin-Liang, 330, Taoyuan City, Taoyuan County (TW); Ping, Shan-Wei, 330, Taoyuan City, Taoyuan County (TW)
(74) Representative: 2K Patentanwälte Blasberg Kewitz & Reichel

(56) References cited:
- EP-A- 1 392 022
- EP-A- 1 450 240
- US-A- 6 144 865
- US-A1- 2004 214 616
- US-B1- 6 829 493
- US-B1- 6 978 149
- "Digital cellular telecommunications system (Phase 2+); Universal Mobile Telecommunications System (UMTS); AT command set for User Equipment (UE) (3GPP TS 27.007 version 7.4.0 Release 7); ETSI TS 127 007" ETSI STANDARDS, LIS, SOPHIA ANTIPOLIS CEDEX, FRANCE, vol. 3-T2, no. V7.4.0, 1 June 2007 (2007-06-01), XP014038038 ISSN: 0000-0001

## Description

### CROSS REFERENCE TO RELATED APPLICATIONS

This Application claims priority of Taiwan Patent Application No. 096134696, filed on September 17, 2007,.

### BACKGROUND OF THE INVENTION

### Field of the Invention

The invention relates to communication apparatuses and related network search methods, and more particularly, to network search methods for use in a communication apparatus in a place that loses network signals to return to a place having the network signals.

### Description of the Related Art

Due to the nature of communication apparatuses, such as mobile phones or handsets, the communication apparatuses may move from a place having network signal coverage to a place not having network signal coverage, thereby losing and regaining signals from the network. When a user enters an elevator, a basement or a place without network signal coverage, a radio frequency (RF) module of the communication apparatus will enter into a sleep mode to perform periodic network searches according to a specific sleep cycle so as to reduce power consumption of the communication apparatus. At each end of the sleep cycle, the RF module will perform a network search for searching signals from the network. If signals from the network are successfully obtained, the communication apparatus performs a serial of registration and authentication procedures to re-connect to the network; otherwise, another sleep cycle is entered and a network search is performed again at the end of next sleep cycle.

Generally speaking, the RF module will perform a network search only at each end of the sleep cycle when the communication apparatus enters the sleep mode. The aforementioned search strategy during the sleep mode, however, may not immediately reflect changes in network signals under some situations. In such a case, users may need to wait for a period of time, or passively wait till the end of the current sleep cycle, before another network search is conducted after the RF module has been activated for detecting recovery of the network signals. Additionally, under some situations, users may need to wait even in areas where network signals are good enough. The documents EP 1392 022 A2, US 2004/0214616 A1, US 6,978,149 B1, US 6,144,865 US 6 829 493 B1, EP 1450 240 A2 disclose various methods to manage the battery energy usage by a mobile device camping on a cellular network. The ETSI TS 127 007 V7.4.0 (2007-6) discloses a part of the GSM standard.

### BRIEF SUMMARY OF THE INVENTION

Communication apparatuses and related network search methods are provided to overcome the aforementioned problems for users, so as to reduce the delay time needed to re-perform a network search when a signal is lost, reduce missed messages and improve convenience of the communication apparatus.

An embodiment of a network search method for a communication apparatus which loses connection to a network and enters into a sleep mode is provided. The method comprises the following steps. A power status of the communication apparatus during the sleep mode is first detected. A trigger signal is sent when detecting a change in the power status of the communication apparatus. Then, a radio frequency module is enabled to search for signals from the network according to the trigger signal for attempting to re-connect to the network.

An embodiment of a communication apparatus is also provided. The communication apparatus comprises a radio frequency module, an application processor and a communication processor. The radio frequency module is capable of connecting to a network. The application processor has a detection unit wherein when the application processor enters a sleep mode, the detection unit detects a power status of the application processor and capable of sending a trigger signal when a change in the power status of the application processor has been detected. The communication processor attempts to re-connect to the network by enabling the radio frequency module to search for signals from the network according to the trigger signal.

### BRIEF DESCRIPTION OF THE DRAWINGS

The invention can be more fully understood by reading the subsequent detailed description and examples with reference to the accompanying drawings, wherein:

Fig. 1 is a block diagram of an embodiment of a communication apparatus according to the invention;

Fig. 2 is a flowchart illustrating an embodiment of a network search method according to the invention;

Fig. 3 is a flowchart illustrating another embodiment of a network search method according to the invention; and

Fig. 4 is an embodiment of a state machine illustrating all possible states for the communication apparatus according to the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

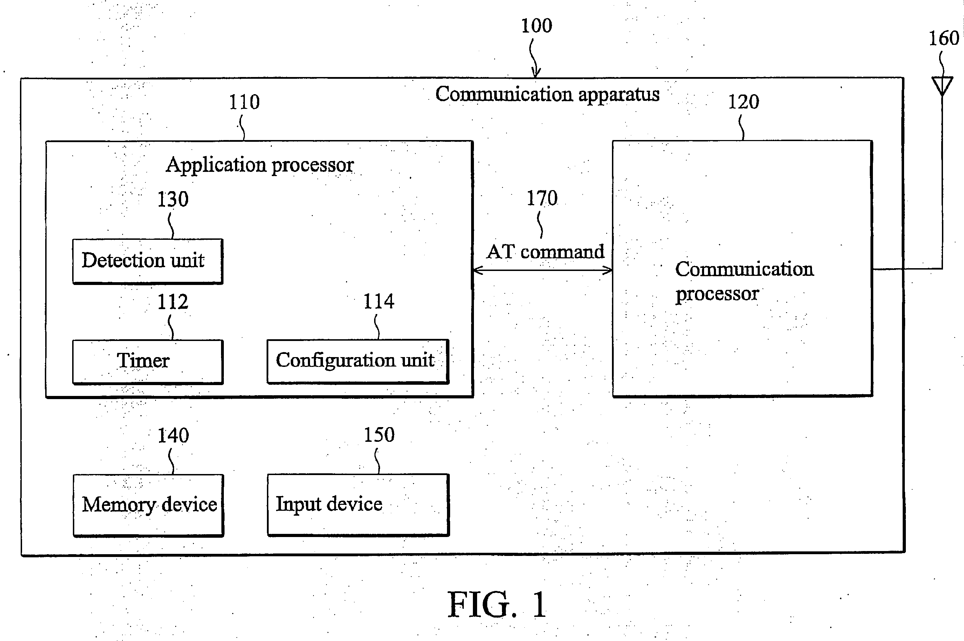

The invention is described with reference to Figs. 1 through 4, which generally relate to a communication apparatus and related network search method for reconnecting to the network after it loses signals from the network and disconnects from the network. In the following detailed description, reference is made to the accompanying drawings which from a part hereof, shown by way of illustration of specific embodiments. These embodiments arc described in sufficient detail to enable those skilled in the art to practice the invention, and it is to be understood that other embodiments may be utilized and that structural, logical and electrical changes may be made without departing from the spirit and scope of the invention. The following detailed description is, therefore, not to be taken in a limiting sense. It should be understood that many of the elements described and illustrated throughout the specification are functional in nature and may be embodied in one or more physical entities or may take other forms beyond those described or depicted.

Embodiments of the invention provide communication apparatuses and associated network search methods for solving the aforementioned problems when using a conventional strategy in a sleep mode. In the embodiments, a communication apparatus (e.g. mobile phone) and related network search method are provided for a communication apparatus. The communication apparatus enters a sleep mode after disconnecting from a connected network or it is unable to receive signals sent from the connected network. Next the communication apparatus determines whether to re-search for signals from the network dependent upon the power status of the communication apparatus such that the communication apparatus is capable of rapidly changing states from a sleep mode to a normal state, such that the user can immediately operate the communication apparatus. When the user turns on or operates the communication apparatus, the power status thereof will be changed and a trigger signal is therefore sent to automatically perform a network search such that the communication apparatus is capable of re-connecting to the network quickly. Thus, the user can attempt to obtain the link to the network again without waiting till the end of the sleep cycle, which reduces the waiting time for the user to re-establish a link to the network and adds to user convenience.

Fig. 1 shows a block diagram of an embodiment of a communication apparatus 100 according to the invention. The communication apparatus 100 at least comprises an application processor 110, a communication processor 120, a memory device 140, an input device 150 and a RF module 160. In one embodiment, the input device 150 may be a keypad set comprising a plurality of keypads for data inputting and controlling operations of the communication apparatus 100. The application processor 110 performs every operations for the communication apparatus 100 and performs necessary procedures according to the input trigger signal trigged by the input device 150. The communication processor 120 controls enabling and disabling of the RF module 160 to search for signals from a network and registers and connects/camps on to the network or receives messages from the connected network and forwards those messages to the application processor 110 for further processing via the RF module 160. A set of predefined standard control commands are utilized between the application processor 110 and the communication processor 120 to communication with each other and transfer messages therebetween. Those predefined standard control commands can be utilized by the application processor 110 to inform the communication processor 120 to enable or disable the RF module 160 so as to perform a network search and connect to the network. Note that, in this embodiment, the control commands are implemented by AT commands 170 which format follows standard AT commands defined by 3GPP so that the invention can be applied in any communication apparatus (such as any kinds of hand-held electronic devices) that utilizes the same AT commands 170. The format of a standard AT command 170 usually has a header AT followed by contents of the command. For example, the application processor 110 may pass a control command "AT+SEARCH" to the communication processor 120 for requesting to perform a network search, and when this command is received by the communication processor 120, it analyzes this command using the predefined communication protocol and recognizes the requirement to perform a network search so that the RF module 160 is enabled to perform the a network search and then the searched results are transmitted to the application processor 110 after the network search has finished.

In addition, the application processor 110 further comprises a timer 112 and a configuration unit 114 in which the timer 112 configures a sleep cycle in a sleep mode (i.e. the application processor 110 will wake up every sleep cycle to perform operations such as searching whether a network is present) while the configuration unit 114 is capable of generating a hardware interrupt event during the sleep mode.

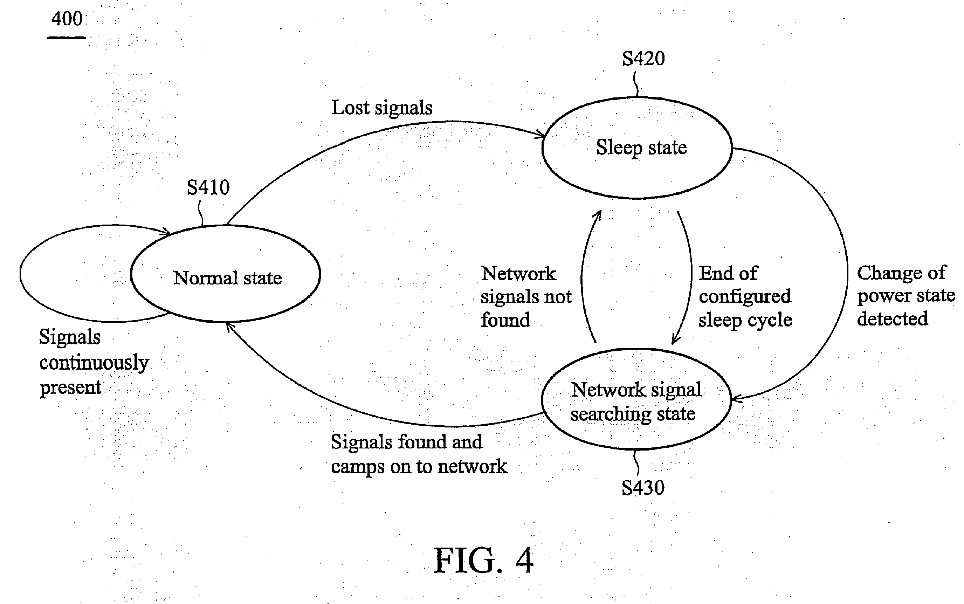

The communication apparatus 100 may be operated in a normal mode or a sleep mode. When the communication apparatus 100 is operated in the normal mode, powers of all its modules are turned on so the communication apparatus 100 is capable of performing all operations, however, the power consumption will be significantly huge. During the sleep mode of the communication apparatus 100, power for many unnecessary modules are turned off, and only power for few necessary modules remain turned on so as to receive input from the input device 150 and to save power. The application processor 110 further comprises a detection unit 130 for detecting power status of the communication apparatus 100, more particullarly, for detecting power status of the application processor 110 within the communication apparatus 100 during the sleep mode. The memory device 140 stores or records a current state of the communication apparatus 100. In one embodiment, current state of the communication apparatus 100 at least comprises normal state, sleep state and a network search state. The states arc detailed with reference to the descriptions of Fig. 4 in below.

Initially, the communication apparatus 100 utilizes the RF module 160 to search whether there is any connectable/registerable base station present so as to connect to a searched network (not shown). When successfully connecting to the network, the communication apparatus 100 is capable of communicating with other communication apparatuses throughout the netwrok.

Once the communication apparatus 100 loses signals from the network and disconnects from the network, the communication apparatus 100 will enter into the sleep mode to save power.

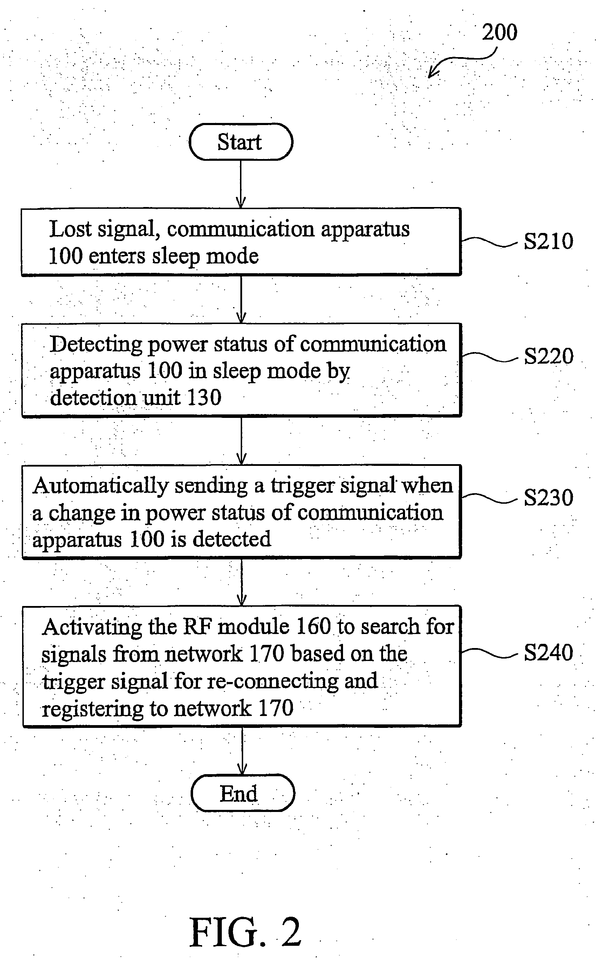

Fig. 2 is a flowchart 200 illustrating an embodiment of a network search method according to the invention. In this embodiment, it is assumed that the communication apparatus 100 has already connected to the network. Referring to Fig. 2, in step S210, when the communication apparatus 100 loses signals from the network and disconnects from the network, the communication apparatus 100 enters sleep mode. Note that the communication apparatus 100 operates minimally during the sleep mode. In step S220, power status of the communication apparatus 100 is detected by the detection unit 130 during the sleep mode. Meanwhile, the power status of the communication apparatus 100 is in "sleep mode". If the communication apparatus 100 is continually disconnected from the network, the power status of the communication apparatus 100 will remain in "sleep mode". When a user goes back to a place which is capable of receiving signals from the network and activates the communication apparatus 100, the power status of the communication apparatus 100 is changed from the "sleep mode" to a '"wake-up mode". Then, in step S230, when the detection unit 130 detects a change in the power status of the communication apparatus 100 (i.e. from the "sleep mode" to the "wake-up mode"), a trigger signal is automatically sent. In step S240, the communication processor 120 is directed to enable/activate the RF module 160 to perform a network search which searches the signals from the network based on the triggered signal so as to re-connect and register to the network.

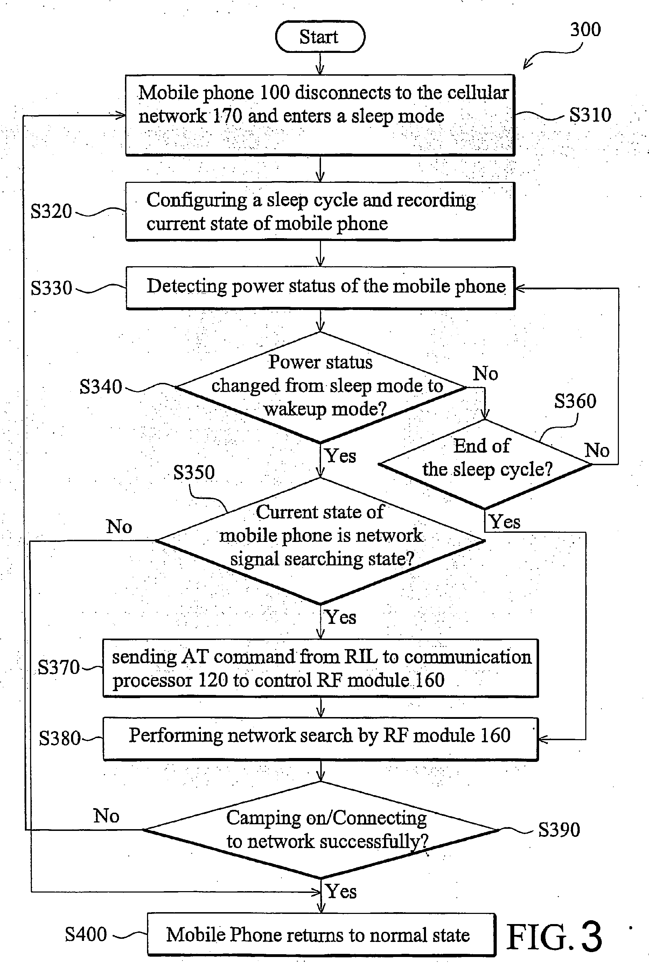

Fig. 3 is a flowchart 300 illustrating another embodiment of a network search method according to the invention. In this embodiment, it is assumed that the communication apparatus 100 is a mobile phone configured as the communication apparatus as shown in Fig.1 and is connected to a cellular network. A user communicates with the cellular network using the mobile phone 100. It is to be understood that, in this embodiment, although the communication apparatus 100 is a mobile phone, the invention is not limited thereto. For example, the communication apparatus 100 may be any hand-held electronic apparatus capable of performing wireless communications.

Referring to Fig. 3, in step S310, when the user moves into a place without cellular network signal coverage (e.g. in the elevator or the basement), the mobile phone 100 loses signals from the cellular network and disconnects from the cellular network, the communication apparatus 100 enters the sleep mode. Hereafter, in step S320, a sleep cycle is configured by the mobile phone 100 for periodically performing a network search to determine whether signals from the cellular network are present and current state of the mobile phone 100 is recorded in the memory device 140. In one embodiment, the sleep cycle may be configured as a time period with a fixed cycle time length, such as 10 seconds for each cycle. That is, the RF module 160 will perform the network search once automatically to search for signals from the cellular network and attempt to re-connect to the cellular network every 10 seconds. In some embodiments, the sleep cycle may be configured as a time period with different time lengths for each cycle, such as 5 seconds for the first and second cycles, 10 seconds for the third and fourth cycles, and 20 seconds for the fifth cycle. That is, the RF module will perform a network search at the end of 5 seconds for the first cycle after the sleep cycle is configured, and wait for 5 seconds to perform the network search again for the second cycle if the network signals are not found during the first cycle. If the network signals from the cellular network are still not found after the second cycle, the RF module 160 will wait for 10 seconds to perform a network search again for the third cycle, whereby the RF module 160 will wait for 10 seconds to perform a network search again for the fourth cycle if the network signals are not found during third cycle, and then the RF module 160 will wait for 20 seconds to perform a network search again for the fifth cycle if the network signals are not found during the fourth cycle. If the network signals from the cellular network are still not found after the fifth cycle, the sleep cycle may be repeated as the aforementioned time lengths (i.e. 5 seconds, 5 seconds, 10 seconds, 10 seconds and 20 seconds) or reconfigured for other time lengths. It is to be understood that the sleep cycle is only for illustration, and not limited thereto. For example, the sleep cycle may also be adjusted dynamically according to network parameters and practical requirements.

When the sleep cycle has been configured, a network search is automatically performed at each end of the sleep cycle to determine whether the user has moved into an area with network signal coverage.

Fig. 4 is an embodiment of a state machine 400 illustrating all possible states for the communication apparatus 100 according to the invention.

As shown in Fig.4, the state machine 400 comprises a normal state S410, a sleep state S420 and a network signal searching state S430. When the communication apparatus 100 is successfully connected to a network and network signals are continuously present, the state of the communication apparatus 100 is in the "normal state" S410 and the communication apparatus 100 is operated in the normal mode to perform various operations. Once the network signals are lost, the state of the communication apparatus 100 changes from the "normal state" S410 to the "sleep state" S420 and the communication apparatus 100 enters the sleep mode. Meanwhile, power for all unnecessary modules are turned off while the power of the RF module 160 is turned on at each end of the sleep cycle for periodically performing the network signal search.

Therefore, the state of the state machine 400 will not change to the "network signal searching state" S430 until each end of the configured sleep cycle or a change in the power status of the communication apparatus has been detected. In "network signal searching state" S430, the RF module 160 will be enabled and activated to perform a network signal search. If the network signals are not found, the state of the state machine 400 will be returned to the "sleep state" S420 for starting a next sleep cycle. If the network signals have been found such that the communication apparatus 100 has camped on/ connected to the network during the search, the state of the state machine 400 will be changed to the "normal state" S410 to perform various operations of the communication apparatus 100. Thus, operations performed by the communication apparatus 100 when a specific signal is present can be known.

In this embodiment, when the sleep cycle has been configured by the communication apparatus 100, current state thereof will be stored into the memory device 140 and indicated as the "network signal searching state" S430 indicating that the signals from the network have been lost, thereby requiring performance of a network search.

Next, in step S330, the power status of the mobile phone 100 during the sleep mode is detected by the detection unit 130. It is assumed that the communication apparatus 100 is not in operation so the power status of the mobile phone 100 is in the "sleep mode".

In step S340, it is determined whether the detected power status of the mobile phone 100 has changed from the "sleep mode" to a "wake-up mode".

A change in the power status of the mobile phone 100 may be caused by a software of hardware event. For example, when a user attempts to use the mobile phone 100 by turning on the power of the mobile phone or pressing one of the keypads of the input device 150, the power status of the mobile phone 100 will be changed from the "sleep mode" to the "wake-up mode" accordingly. Furthermore, a change in the power status of the mobile phone 100 may also be caused by setting a specific time period or specific conditions using the timer 112 or the configuration unit 114 within the application processor 110. For example, in one embodiment, an alarm clock may be configured by the timer 112 or the configuration unit 114 such that the alarm clock is operable during the sleep mode. When the alarm clock is timed out during the sleep mode, the application processor 110 will generate a hardware interrupt event such that the power status of the mobile phone 100 is changed from the "sleep mode" to the '"wake-up mode" accordingly.

If the detected power status of the mobile phone 100 is changed from the "sleep made" to the "wake-up mode" (Yes in the step S340), it is then determine whether current state of the mobile phone 100 is in the "network signal searching" state (step S350). If so (Yes in the step S350), in step S370, AT command 170 is sent from a radio interface layer (RIL) to the communication processor 120 to control the RF module 160. Meanwhile, the mobile phone 100 remains in the sleep state and is not fully activated. Therefore, AT command 170 is sent by the radio interface layer to inform the communication processor 120 to control the RF module 160 for preparing a network search (step S380). The network search is performed by the RF module 160 to determine whether any signals from the network can be found and, if so, the mobile phone performs registration procedures to re-connect and camp on/connect to the network (step S390). If the mobile phone 100 is successfully connected to the network (Yes in the step S390), the state of the mobile phone 100 is changed to the "normal state" and the mobile phone 100 is allowed to perform any operations (e.g. make a phone call) (step S400). If the signals from the network can not be found (No in step S390), the mobile phone 100 may be operated erroneously or may still be located in a place without network signal coverage. Thus, the step returns to step S310, with the mobile phone 100 in the sleep mode, waiting for the ending of the next sleep cycle configured in step S320 to perform a next network search.

If the power status of the mobile phone 100 is detected to have not changed (No in the step S340), the power status will be continuously detected until the end of the sleep cycle (No in step S360). At end of the sleep cycle (Yes in step S360), the RF module 160 is enabled to perform a network search (step S380) and the connecting step S490 is further performed.

For example, it is assumed that the user has already moved from a place without any network signal coverage to a place with network signal coverage and the power of the mobile phone 100 has been turned on or one of the keypads of the input device 150 has been pressed for preparation to use the mobile phone 100 before the ending of the sleep cycle. Because of the aforementioned operations, the power status of the mobile phone 100 is changed to the "wake-up mode" to indicate that the user is preparing to use the mobile phone 100. Accordingly, a change in the power status of the mobile phone 100 is detected by the detection unit 130 and current state of the mobile phone 100 recorded is equal to the "network signal searching state". Thus, the radio interface layer of the application processor 110 will send a specific AT command 170 as a trigger signal to inform the communication processor 120. The communication processor 120 receives the AT command 170 and analyzes that it is a request to perform a network search immediately so the RF module 160 is enabled to perform the network search. Since the user has already moved to a place with the network signal coverage, the RF module 160 can find the network signals quickly and attempt to establish a connection to the network. After the connection has been successfully established, the state of the mobile phone 100 is configured to the "normal state" and the mobile phone 100 is operated in the normal mode", thus allowing the user to perform various operations using the mobile phone 100.

In summary, with the provided communication apparatus and related network search method, operation requirement of the user can be immediately performed by detecting a change in the power status of the communication apparatus during the sleep mode by the detection unit. Additionally, network signal search is quickly performed once the network signals are presented, without waiting for the ending of the sleep cycle, effectively reducing the delay time needed for users to re-perform a network search and improve user convenience.

Although a communication apparatus having two processors are applied in the embodiments, it is to be understood that the invention may also be applied in any communication apparatus having a single or more than two processors (as would be apparent to those skilled in the art).

The methods and apparatus described can be stored in the memory of an electronic apparatus (e.g., set top box, PDA, mobile phone, etc.) as a set of instructions to be executed. In addition, the instructions to perform the methods and apparatuses as described above can alternatively be stored on other forms of machine-readable media, including magnetic and optical disks, accessible via a disk drive (or computer-readable medium drive). Further, the instructions can be downloaded onto a computing device over a data network in a form of compiled or linked versions.

While the invention has been described by way of example and in terms of preferred embodiment, it is to be understood that the invention is not limited thereto. To the contrary, it is intended to cover various modifications and similar arrangements (as would be apparent to the skilled in the art). Therefore, the scope of the appended claims should be accorded to the broadest interpretation so as to encompass all such modifications and similar arrangements.

## Claims

1. A network search method (200) for a communication apparatus (100) which loses connection to a network and enters into a sleep mode (step S210), wherein the communication apparatus comprises an application processor and a radio frequency module (160) capable of searching for signals from the network and the radio frequency module is operated in the sleep mode which consumes less power than a normal mode, the method is **characterized by** :
detecting a power status of the application processor within the communication apparatus during the sleep mode of the communication apparatus (step S220);
sending a trigger signal when detecting a change in the power status of the application processor and the radio frequency module is operated in the sleep mode (step S230); and
enabling the radio frequency module to search for signals from the network according to the trigger signals for attempting to connect to the network (step S240).

2. The method of claim 1, further comprising:
configuring a sleep cycle (step S310);
periodically enabling the radio frequency module to search for signals from the network for attempting to connect to the network at the end of the sleep cycle (steps S350-S390).

3. The method of claim 2, wherein the change in the power status of the application processor is detected before the end of the sleep cycle.

4. The method of claim 2, wherein the sleep cycle is a fixed time length.

5. The method of claim 2, wherein the sleep cycle is a time length selected from one of a plurality of different time lengths.

6. The method of claim 1, further comprising:
recording a current state of the communication apparatus (step S220).

7. The method of claim 6, wherein the step of sending the trigger signal comprises:
sending the trigger signal when detecting that the power status of the application processor has changed and the current state of the communication apparatus is a network signal searching state (step 370-380).

8. A communication apparatus (100), wherein the communication apparatus comprises a radio frequency module (160) capable of connecting to a network and the radio frequency module is operated in a sleep mode which consumes less power than a normal mode, the communication apparatus is **characterized by**:
an application processor (110) having a detection unit (130) wherein when the application processor enters into the sleep mode, the detection unit is arranged to detect a power status of the application processor and the detection unit is arranged to a trigger signal when a change in the power status of the application processor has been detected and the radio frequency module is operated in the sleep mode (steps S220-S230); and
a communication processor (120) attempting to connect to the network according to the trigger signal, by enabling the radio frequency module to search for signals from the network (step S240).

9. The communication apparatus of claim 8, wherein the communication apparatus further comprises at least one keypad, and the change in the power status of the application processor is caused by pressing the keypad of the communication apparatus.

10. The communication apparatus of claim 8, further comprising a memory device for recording a current state of the communication apparatus and sending the trigger signal when detecting that the change in the power status of the application processor and the current state of the communication apparatus is a network signal searching state.

11. The communication apparatus of claim 8, further comprising a timer (112) for configuring a sleep cycle and periodically enabling the radio frequency module to search for signals from the network for attempting to connect to the network at the end of the sleep cycle.

12. The communication apparatus of claim 11, wherein the detection unit is capable of detecting the change in the power status of the application processor and sending the trigger signal before the end of the sleep cycle.

13. The communication apparatus of claim 12, wherein the sleep cycle is a time length selected from one of a plurality of different time lengths.

14. The communication apparatus of claim 8, wherein the application processor further comprises a configuration unit (114) for generating a hardware interrupt event during the sleep mode to change the power status of the communication apparatus.

15. The communication apparatus of claim 8, wherein the trigger signal is sent by a radio interface layer (RIL) of the application processor (step S370).

## Patentansprüche

1. Netzwerksuchverfahren (200) für eine Kommunikationsvorrichtung (100), die eine Verbindung mit einem Netzwerk verliert und in einen Schlummermodus eintritt (Schritt S210), wobei die Kommunikationsvorrichtung einen Applikationsprozessor und ein Funkfrequenzmodul (160) umfasst, das nach Signalen aus dem Netzwerk suchen kann, und das Funkfrequenzmodul im Schlummermodus betrieben wird, der weniger Strom aufnimmt als ein normaler Modus, wobei das Verfahren **gekennzeichnet ist durch**:
Erkennen eines Stromstatus des Applikationsprozessors in der Kommunikationsvorrichtung während des Schlummermodus der Kommunikationsvorrichtung (Schritt S220);
Senden eines Auslösesignals, wenn eine Änderung des Stromstatus des Applikationsprozessors erfasst wird und das Funkfrequenzmodul im Schlummermodus (Schritt S230) betrieben wird; und
Ermöglichen, dass das Funkfrequenzmodul nach Signalen aus dem Netzwerk sucht, gemäß dem Auslösesignal, um zu versuchen, eine Verbindung mit dem Netzwerk herzustellen (Schritt S240).

2. Verfahren nach Anspruch 1, das ferner Folgendes beinhaltet:
Konfigurieren eines Schlummerzyklus (Schritt S310);
periodisches Befähigen des Funkfrequenzmoduls, nach Signalen von dem Netzwerk zu suchen, um zu versuchen, am Ende des Schlummerzyklus eine Verbindung mit dem Netzwerk herzustellen (Schritte S350-S390).

3. Verfahren nach Anspruch 2, wobei die Änderung des Stromstatus des Applikationsprozessors vor dem Ende des Schlummerzyklus erfasst wird.

4. Verfahren nach Anspruch 2, wobei der Schlummerzyklus eine Zeit von fester Länge hat.

5. Verfahren nach Anspruch 2, wobei der Schlummerzyklus eine zeitliche Länge hat, die aus mehreren verschiedenen zeitlichen Längen ausgewählt wird.

6. Verfahren nach Anspruch 1, das ferner das Aufzeichnen eines aktuellen Zustands der Kommunikationsvorrichtung (Schritt S220) beinhaltet.

7. Verfahren nach Anspruch 6, wobei der Schritt des Sendens des Auslösesignals das Senden des Auslösesignals beim Erfassen beinhaltet, dass sich der Stromstatus des Applikationsprozessors geändert hat und der aktuelle Zustand der Kommunikationsvorrichtung ein Netzwerksignalsuchzustand ist (Schritt 370-380).

8. Kommunikationsvorrichtung (100), wobei die Kommunikationsvorrichtung ein Funkfrequenzmodul (160) umfasst, das sich an ein Netzwerk anschließen kann, und das Funkfrequenzmodul in einem Schlummermodus betrieben wird, der weniger Strom aufnimmt als ein normaler Modus, wobei die Kommunikationsvorrichtung **gekennzeichnet ist durch**:
einen Applikationsprozessor (110) mit einer Detektionseinheit (130), wobei die Detektionseinheit, wenn der Applikationsprozessor in den Schlummermodus eintritt, einen Stromstatus des Applikationsprozessors erfasst und ein Auslösesignal sendet, wenn eine Änderung des Stromstatus des Applikationsprozessors erfasst wurde und das Funkfrequenzmodul im Schlummermodus betrieben wird (Schritte S220-S230); und
einen Kommunikationsprozessor (120), der versucht, eine Verbindung zu dem Netzwerk gemäß dem Auslösesignal **durch** Befähigen des Funkfrequenzmoduls herzustellen, nach Signalen aus dem Netzwerk zu suchen (Schritt S240).

9. Kommunikationsvorrichtung nach Anspruch 8, wobei die Kommunikationsvorrichtung ferner wenigstens eine Tastatur umfasst und die Änderung des Stromstatus des Applikationsprozessors durch Drücken auf die Tastatur der Kommunikationsvorrichtung bewirkt wird.

10. Kommunikationsvorrichtung nach Anspruch 8, die ferner ein Speichergerät zum Aufzeichnen eines aktuellen Zustands der Kommunikationsvorrichtung und zum Senden des Auslösesignals umfasst, wenn erkannt wird, dass die Änderung des Stromstatus des Applikationsprozessors und der aktuelle Zustand der Kommunikationsvorrichtung ein Netzwerksignalsuchzustand ist.

11. Kommunikationsvorrichtung nach Anspruch 8, die ferner eine Zeituhr (112) zum Konfigurieren eines Schlummerzyklus und zum periodischen Befähigen des Funkfrequenzmoduls umfasst, nach Signalen aus dem Netzwerk zu suchen, um zu versuchen, am Ende des Schlummerzyklus eine Verbindung mit dem Netzwerk herzustellen.

12. Kommunikationsvorrichtung nach Anspruch 11, wobei die Detektionseinheit die Änderung des Stromstatus des Applikationsprozessors erkennen und das Auslösesignal vor dem Ende des Schlummerzyklus senden kann.

13. Kommunikationsvorrichtung nach Anspruch 12, wobei der Schlummerzyklus eine zeitliche Länge hat, die aus mehreren verschiedenen zeitlichen Längen ausgewählt ist.

14. Kommunikationsvorrichtung nach Anspruch 8, wobei der Applikationsprozessor ferner eine Konfigurationseinheit (114) zum Erzeugen eines Hardware-Interrupt-Events während des Schlummermodus umfasst, um den Stromstatus der Kommunikationsvorrichtung zu ändern.

15. Kommunikationsvorrichtung nach Anspruch 8, wobei das Auslösesignal von einer Funkschnittstellenschicht (RIL) des Applikationsprozessors gesendet wird (Schritt S370).

## Revendications

1. Une méthode de recherche d'un réseau (200) pour un appareil de communication (100) perdant la connexion à un réseau et entrant dans un mode de veille (étape S210), dans laquelle l'appareil de communication comporte un processeur applicatif et un module radio-fréquence (160) capable de rechercher des signaux du réseau et le module radio-fréquences fonctionnant en mode veille consommant moins de courant qu'en mode normal, la méthode étant **caractérisée par**:
la détection d'un état de puissance du processeur applicatif au sein de l'appareil de communication durant un mode de veille de l'appareil de communication (étape S220);
l'envoi d'un signal de déclenchement lors de la détection d'un changement d'état de puissance du processeur applicatif et lorsque le module radio-fréquence est dans un mode de veille (étape S230); et
l'activation du module radio-fréquence de manière à rechercher des signaux du réseau en fonction du signal de déclenchement pour tenter une connexion au réseau (étape S240).

2. La méthode selon la revendication 1, comportant en outre:
la configuration d'un cycle de veille (étape S310);
l'activation périodique du module radio-fréquence pour la recherche de signaux du réseau pour tenter une connexion au réseau en fin du cycle de veille (étape S350-S390);

3. La méthode de la revendication 2, dans laquelle le changement de l'état de puissance du processeur applicatif est détectée préalablement la fin du cycle de veille.

4. La méthode de la revendication 2, dans laquelle le cycle de veille présente une durée fixe.

5. La méthode de la revendication 2, dans laquelle le cycle de veille présente une durée sélectionnée au sein d'une pluralité de durées différentes.

6. La méthode de la revendication 1, comportant en outre:
l'enregistrement de l'état courant du dispositif de communication (étape S220).

7. La méthode de la revendication 6, dans laquelle l'étape d'envoi du signal de déclenchement comporte:
l'envoi d'un signal de déclenchement lors de la détection d'un changement de l'état de puissance du processeur applicatif, et que l'état courant de l'appareil de communication est un état de recherche de signal de réseau (étape 370-380)

8. Un appareil de communication (100), comprenant un module radio-fréquence (160) capable d'une connexion à un réseau et le module radio-fréquence pouvant être opéré dans un mode de veille consommant moins de courant que dans un mode normal, l'appareil de communication étant **caractérisé par**:
un processeur applicatif (110) ayant une unité de détection (130) dans laquelle lorsque le processeur applicatif entre dans un mode de veille, l'unité de détection est conçue de manière à détecter un état de puissance du processeur applicatif et l'unité de détection est conçue pour envoyer un signal de déclenchement lors de ka détection du changement d'état de puissance du processeur applicatif et lorsque le module radio-fréquence est opéré dans un mode de veille (étape S220-S230), et
un processeur de communication (120) tentant une connexion au réseau en réponse au signal de déclenchement, au moyen d'une activation du module radio-fréquence pour la recherche de signaux du réseau (étape S240).

9. L'appareil de communication selon la revendication 8, dans lequel l'appareil de communication comporte en outre au moins un clavier, et le changement de l'état de puissance du processeur applicatif résulte de l'appui d'une touche du clavier de l'appareil de communication.

10. L'appareil de communication selon la revendication 8, comportant en outre un dispositif mémoire pour l'enregistrement de l'état courant de l'appareil de communication et l'envoi du signal de déclenchement lors de la détection du changement de l'état de puissance du processeur applicatif et que l'état courant de l'appareil de communication est un état de recherche de signal de réseau.

11. L'appareil de communication selon la revendication 8, comportant en outre un temporisateur (112) pour la configuration du cycle de veille et pour l'activation périodique du module radio-fréquence pour la recherche de signaux du réseau dans le but de tenter une connexion au réseau à la fin du cycle de veille.

12. L'appareil de communication selon la revendication 11, dans lequel l'unité de détection est capable de détecter le changement de l'état de puissance du processeur applicatif et l'envoi du signal de déclenchement avant la fin du cycle de veille.

13. L'appareil de communication selon la revendication 12, dans lequel le cycle de veille présente une durée choisie à partir d'un ensemble de durées différentes.

14. L'appareil de communication selon la revendication 8, dans lequel le processeur applicatif comporte en outre une unité de configuration (114) pour générer un événement d'interruption matérielle durant le cycle de veille pour changer l'état de puissance de l'appareil de communication.

15. L'appareil de communication selon la revendication 8, dans lequel le signal de déclenchement est envoyé au moyen d'une couche d'interface radio (RIL) du processeur applicatif (étape S370).
